# EUROPÄISCHE PATENTANMELDUNG

(11) **EP 4 042 869 A1**
(43) Veröffentlichungstag der Anmeldung: **17.08.2022**
(21) Anmeldenummer: 21156617.9
(22) Anmeldetag: 11.02.2021
(51) Int. Cl.: A01N 65/40, A01N 65/08, A01N 65/32, A01P 17/00

(54) **ZUSAMMENSETZUNG ZUM SCHUTZ VON HAUSTIEREN VOR PARASITEN UND/ODER ZUR REDUKTION EINES PARASITENBEFALLS VON HAUSTIEREN UND/ODER ZUR BEKÄMPFUNG VON PARASITEN BEI HAUSTIEREN**

(71) Anmelder: Bogar AG, 8304 Wallisellen (CH); Delipet AG, 4434 Hölstein (CH)
(72) Erfinder: Gamper, Reto, 8442 Hettlingen (CH); Stohler, Dominik, 4424 Arboldswil (CH)
(74) Vertreter: Patentanwälte Ruff, Wilhelm, Beier, Dauster & Partner mbB

(57) **Zusammenfassung**

Die Erfindung betrifft eine Zusammensetzung zum Schutz von Haustieren, insbesondere Hunden, vor Parasiten, insbesondere Flöhen und/oder Zecken, und/oder zur Reduktion eines Parasitenbefalls, insbesondere Flohbefalls und/oder Zeckenbefalls, von Haustieren, insbesondere Hunden, und/oder zur Bekämpfung oder Abwehr von Parasiten, insbesondere Flöhen und/oder Zecken, bei Haustieren, insbesondere Hunden, aufweisend nachfolgende Bestandteile
- einen aus Kokosnuss gewonnenen Bestandteil und
- Zistrose oder einen aus Zistrose gewonnenen Bestandteil und/oder Schwarzkümmel oder einen aus Schwarzkümmel gewonnenen Bestandteil,
wobei der aus Kokosnuss gewonnene Bestandteil einen Anteil von wenigstens 10 Gew.-% aufweist, bezogen auf das Gesamtgewicht der Zusammensetzung.

## Beschreibung

### ANWENDUNGSGEBIET UND STAND DER TECHNIK

Die Erfindung betrifft eine Zusammensetzung, vorzugsweise zum Schutz von Haustieren, insbesondere Hunden, vor Parasiten, vorzugsweise Ektoparasiten (Außenparasiten), insbesondere Flöhen und/oder Zecken, und/oder zur Reduktion eines Parasitenbefalls, vorzugsweise Ektoparasitenbefalls (Außenparasitenbefalls), insbesondere Flohbefalls und/oder Zeckenbefalls, von oder bei Haustieren, insbesondere Hunden, und/oder zur Bekämpfung oder Abwehr von Parasiten, vorzugsweise Ektoparasiten (Außenparasiten), insbesondere Flöhen und/oder Zecken, bei Haustieren, insbesondere Hunden.

Zur Abwehr eines Zecken- oder Flohbefalls von Hunden kommen heutzutage verschiedene Mittel zum Einsatz.

Ein Mittel stellen neurotoxisch wirkende Arzneimittel dar, die die Parasiten über die Aufnahme bei der Blutmahlzeit auf der Haut des Hundes abtöten.

Ein weiteres Mittel stellen biozide Wirkstoffe auf pflanzlicher Basis, insbesondere ätherische Öle, dar, die die Haut und das Fell des Hundes über Duft- und Hautbeschaffenheit für Parasiten für mehrere Wochen unangenehm machen, wodurch die Parasiten abgeschreckt oder vertrieben werden.

Schließlich sind diverse antiparasitäre Zusammensetzungen auf Fleischbasis kommerziell erhältlich. Der Fleischanteil erhöht die Fressakzeptanz, wodurch sich die antiparasitäre Wirkung der Zusammensetzungen besser entfalten kann.

Die konventionellen Mittel zur Parasitenbekämpfung haben somit häufig den Nachteil, dass sie entweder in Form von Arzneimitteln das Risiko von unerwünschten Nebenwirkungen beinhalten und/oder gefährliche Chemikalien/Gifte freisetzen und/oder nicht nachhaltig produzierbare Fleischbestandteile beinhalten. Konventionelle Mittel stellen daher keinen nachhaltigen Ansatz zur Bekämpfung von Parasiten dar.

### AUFGABE UND LÖSUNG

Der vorliegenden Erfindung liegt daher die Aufgabe zugrunde, eine Zusammensetzung bereitzustellen, die die eingangs im Zusammenhang von konventionellen Mitteln zur Bekämpfung von Parasiten, insbesondere Flöhen und/oder Zecken, problematisierten Nachteile wenigstens teilweise vermeidet.

Diese Aufgabe wird gelöst durch eine Zusammensetzung gemäß unabhängigem Anspruch 1. Bevorzugte Ausgestaltungen der Zusammensetzung sind in den abhängigen Ansprüchen definiert. Der Wortlaut sämtlicher Ansprüche wird hiermit durch ausdrückliche Bezugnahme zum Inhalt der vorliegenden Beschreibung gemacht.

Gemäß einem ersten Aspekt betrifft die Erfindung eine Zusammensetzung, vorzugsweise zum Schutz von Haustieren, insbesondere Hunden, vor Parasiten, vorzugsweise Ektoparasiten (Außenparasiten), insbesondere Flöhen und/oder Zecken, und/oder zur Reduktion eines Parasitenbefalls, vorzugsweise Ektoparasitenbefalls (Außenparasitenbefalls), insbesondere Flohbefalls und/oder Zeckenbefalls, von oder bei Haustieren, insbesondere Hunden, und/oder zur Bekämpfung oder Abwehr von Parasiten, vorzugsweise Ektoparasiten (Außenparasiten), insbesondere Flöhen und/oder Zecken, bei Haustieren, insbesondere Hunden. Die Zusammensetzung kann im Sinne der vorliegenden Erfindung daher auch als antiparasitäre Zusammensetzung bezeichnet werden.

Die Zusammensetzung weist nachfolgende Bestandteile auf:
- einen aus Kokosnuss gewonnenen Bestandteil
   und
- Zistrose oder einen aus Zistrose gewonnenen Bestandteil und/oder Schwarzkümmel oder einen aus Schwarzkümmel gewonnenen Bestandteil.

Die Zusammensetzung kann somit
- einen aus Kokosnuss gewonnenen Bestandteil und
- Zistrose oder einen aus Zistrose gewonnenen Bestandteil
   oder
- einen aus Kokosnuss gewonnenen Bestandteil und
- Schwarzkümmel oder einen aus Schwarzkümmel gewonnenen Bestandteil
   oder
- einen aus Kokosnuss gewonnenen Bestandteil,
- Zistrose oder einen aus Zistrose gewonnenen Bestandteil und
- Schwarzkümmel oder einen aus Schwarzkümmel gewonnenen Bestandteil aufweisen.

Die Zusammensetzung der vorliegenden Erfindung zeichnet sich besonders dadurch aus, dass der aus Kokosnuss gewonnene Bestandteil einen Anteil von wenigstens 10 Gew.-% aufweist, bezogen auf das Gesamtgewicht der Zusammensetzung.

Unter dem Ausdruck "Zistrose" soll im Sinne der vorliegenden Erfindung die Pflanzengattung Cistus, d.h. eine Pflanzengattung der Familie der Zistrosengewächse (Cistaceae), oder eine Art der Pflanzengattung Cistus, insbesondere ausgewählt aus der Gruppe bestehend aus Weißliche Zistrose, Cistus asper, Cistus chinamadensis, Clusius-Zistrose, Kretische Zistrose, Krause Zistrose, Cistus grancanariae, Verschiedenblättrige Zistrose, Cistus horrens, Cistus inflatus, Lack-Zistrose, Lorbeerblättrige Zistrose, Cistus libanotis, Montpellier-Zistrose, Cistus munbyi, Cistus ocreatus, Cistus osbeckiifolius, Cistus palmensis, Kleinblütige Zistrose, Pappelblättrige Zistrose, Cistus pouzolzii, Salbeiblättrige Zistrose, Cistus sintenisii, Beinwellblättrige Zistrose, Cistus florentinus (Hybrid aus Cistus monspeliensis und Cistus salviifolius), Cistus incanus (Hybrid aus Cistus albidus und Cistus crispus), Cistus laxus (Hybrid aus Cistus inflatus und Cistus populifolius), Cistus ledon (Hybrid aus Cistus laurifolius und Cistus monspeliensis), Cistus purpureus (Hybrid aus Cistus creticus und Cistus ladanifer) und Mischungen von wenigstens zwei der vorgenannten Zistrosearten, verstanden werden. Dabei kann der Ausdruck "Zistrose" ferner die gesamte Pflanze oder nur Teile, wie beispielsweise Blüten, Samen, Blätter, Stengel oder Wurzeln, davon bedeuten.

Bei der Zistrose im Sinne der vorliegenden Erfindung kann es sich insbesondere um Cistus incanus handeln.

Unter dem Ausdruck "Schwarzkümmel" soll im Sinne der vorliegenden Erfindung Echter Schwarzkümmel (Nigella sativa) oder Römischer Koriander verstanden werden, der zur Familie der Hahnenfußgewächse (Ranunculaceae) gehört. Dabei kann der Ausdruck "Schwarzkümmel" ferner die gesamte Pflanze oder nur Teile, wie beispielsweise Blüten, Samen, Blätter, Stengel oder Wurzeln, davon bedeuten.

Die antiparasitäre Wirkung der erfindungsgemäßen Zusammensetzung beruht insbesondere darauf, dass ihre vorgenannten Bestandteile Inhaltsstoffe aufweisen, die einen für Parasiten, vorzugsweise Ektoparasiten, insbesondere Flöhe und/oder Zecken, unangenehmen Geruch und/oder Geschmack verursachen. Die entsprechenden Inhaltsstoffe werden dabei über die Haut und/oder den Atem der Haustiere, insbesondere Hunde, ausgeschieden. Dadurch ist eine Parasitenabwehr, insbesondere eine Abwehr von Flöhen und/oder Zecken, und/oder eine Reduzierung eines Parasitenbefalls, insbesondere Floh- und/oder Zeckenbefalls, erzielbar. Im Falle des aus Kokosnuss gewonnenen Bestandteils besitzt die im Fruchtfleisch, insbesondere in der Kopra, der Kokosnuss vorkommende Laurinsäure eine antiparasitäre Wirkung. Im Falle der Zistrose oder des aus Zistrose gewonnenen Bestandteils besitzen Verbindungen, wie beispielsweise ätherische Öle und/oder Polyphenole, eine antiparasitäre Wirkung. Im Falle des Schwarzkümmels oder des aus Schwarzkümmel gewonnenen Bestandteils kann die antiparasitäre Wirkung auf terpenoide Naturstoffe, wie beispielsweise Carvacol und/oder Thymol, zurückgeführt werden.

Die Erfindung beruht unter anderem auf der Erkenntnis, dass sich die antiparasitäre Wirkung durch einen im Vergleich zu konventionellen Zusammensetzungen deutlich erhöhten Anteil an einem aus Kokosnuss gewonnenen Bestandteil deutlich verbessern lässt. Zudem stellte sich überraschenderweise heraus, dass sich durch einen erhöhten Anteil eines aus Kokosnuss gewonnenen Bestandteils auch die Fressakzeptanz erhöhen lässt, wodurch sich die antiparasitäre Wirkung der erfindungsgemäßen Zusammensetzung besser entfalten kann.

In Ausgestaltung der Erfindung weist der aus Kokosnuss gewonnene Bestandteil einen Anteil von 10 Gew.-% bis 50 Gew.-%, insbesondere 25 Gew.-% bis 35 Gew.-%, vorzugsweise 28 Gew.-% bis 34 Gew.-%, insbesondere 28 Gew.-% bis 32 Gew.-%, auf, bezogen auf das Gesamtgewicht der Zusammensetzung.

In weiterer Ausgestaltung der Erfindung handelt es sich bei dem aus Kokosnuss gewonnenen Bestandteil um einen aus dem Fruchtfleisch, bevorzugt aus der Kopra, der Kokosnuss gewonnenen Bestandteil. Unter dem Ausdruck "Kopra" soll im Sinne der vorliegenden Erfindung getrocknetes Nährgewebe von Kokosnüssen verstanden werden, aus dem Kokosöl gewonnen wird. Vorzugsweise handelt es sich bei dem Bestandteil um Kokosöl oder Kokosnussöl. Das Kokosöl bzw. Kokosnussöl, auch als Kokosfett bezeichnet, stellt ein bei Raumtemperatur festes, weißes bis weißlich-gelbes Pflanzenöl dar, das, wie oben erwähnt, aus Kopra gewonnen wird. Es zeichnet sich durch einen sehr hohen Anteil an gesättigten Fettsäuren und/oder entsprechenden Triglyceriden aus und ist reich an Capryl-, Laurin- sowie Myristinsäure und/oder entsprechenden Fettsäureresten (d.h. Capryl-, Laurin- sowie Myristinsäureresten). Daneben kann das Kokosöl bzw. Kokosnussöl Spuren von Mineralstoffen, Aminosäuren, Vitamin E sowie Lactonen enthalten. Dabei sind/ist vor allem die Laurinsäure und/oder laurinsäureresthaltigen Triglyceride aufgrund ihres stechenden Geruchs in der Lage, Parasiten, insbesondere Flöhe und/oder Zecken, effektiv abzuwehren. Bei regelmäßigem Verzehr entsteht so bereits nach kurzer Zeit ein Schutzschild gegen Parasiten. Aufgrund des stechenden Geruchs von Laurinsäure bzw. laurinsäureresthaltigen Triglyceriden verlieren die Parasiten ihre Orientierung zum Haustier, insbesondere Hund, und werden auf diese Weise vergrämt. Zudem hat Kokosöl bzw. Kokosnussöl den Vorteil, dass es allgemein die Hautgesundheit sowie die Entstehung eines glänzenden Fells fördert. Obendrein ist es gut für die Verdauung sowie die Zahngesundheit.

In weiterer Ausgestaltung der Erfindung handelt es sich bei dem aus Kokosnuss gewonnenen Bestandteil um Kokosflocken (auch als Kokosnussflocken bezeichnet) oder Kokosraspeln. Kokosflocken oder Kokosraspeln haben den Vorteil, dass sie als Ballaststoffe gut für die Verdauung, Darmtätigkeit sowie Darmflora des Haustiers, insbesondere Hundes, sind und zudem für ein glänzendes Fell sowie eine verbesserte Hautfeuchtigkeit sorgen.

Weiter kann der aus Kokosnuss gewonnene Bestandteil, insbesondere die Kokosflocken (Kokosnussflocken) oder Kokosraspeln, mit einer Fondantmasse vermischt sein.

Unter dem Ausdruck "Fondant" soll im Sinne der vorliegenden Erfindung eine weiche, pastöse Zuckermasse verstanden werden, die vorzugsweise aus Wasser und wenigstens einem weiteren Bestandteil, insbesondere ausgewählt aus der Gruppe bestehend aus Saccharose, Glucosesirup, Invertzuckercreme, Zuckeralkohole wie Sorbit und/oder Mannit und Mischungen von wenigstens zwei der vorgenannten weiteren Bestandteile, hergestellt wird. Bevorzugt wird das Fondant aus Wasser, Saccharose, Glucosesirup, Invertzuckercreme und/oder Zuckeralkoholen, beispielsweise Sorbit und/oder Mannit, hergestellt. Die Masse wird üblicherweise gekocht und kann anschließend durch starkes Kneten und schnelle Abkühlung zu einer weichen Paste verarbeitet werden. Anschließend können Aromen und/oder Lebensmittelfarbe hinzugefügt werden.

In weiterer Ausgestaltung der Erfindung handelt es sich bei dem aus Zistrose gewonnenen Bestandteil um ein Öl oder Harz, insbesondere um Ladanum.

Unter dem Ausdruck "Ladanum", auch als Labdanum oder Laudanum bezeichnet, soll im Sinne der vorliegenden Erfindung ein Harz oder Öl verstanden werden, das aus verschiedenen Arten von Zistrosen gewonnen werden kann.

Bevorzugt handelt es sich bei dem aus Zistrose gewonnenen Bestandteil um ein aus dem Harz von Zistrose, insbesondere durch Wasserdampfdestillation, gewonnenes Labdanumöl. Das Labdanumöl weist als Inhaltsstoffe vorzugsweise Terpene, insbesondere Monoterpen-Kohlenwasserstoffe, bevorzugt ausgewählt aus der Gruppe bestehend aus Pinen, Camphen, Myrcen, Phellandren und Mischungen von wenigstens zwei der vorgenannten Monoterpen-Kohlenwasserstoffe, auf.

In weiterer Ausgestaltung der Erfindung weist die Zistrose oder der aus Zistrose gewonnene Bestandteil einen Anteil von 0,1 Gew.-% bis 4 Gew.-%, vorzugsweise 1,5 Gew.-% bis 2 Gew.-%, auf, bezogen auf das Gesamtgewicht der Zusammensetzung.

In weiterer Ausgestaltung der Erfindung handelt es sich bei dem aus Schwarzkümmel gewonnenen Bestandteil um ein Öl, d.h. um Schwarzkümmelöl. Das Öl bzw. Schwarzkümmelöl weist vorzugsweise als antiparasitäre Inhaltsstoffe terpenoide Verbindungen, insbesondere Carvacrol und/oder Thymol, auf. Die antiparasitäre Wirkung dieser Verbindungen beruht ebenfalls auf einer Ausscheidung durch die Haut und/oder über den Atem. Die Parasiten nehmen diese Substanzen mit ihrem Geschmacks- und/oder Geruchssinn war und werden hierdurch abgeschreckt. Neben den vorgenannten terpenoiden Verbindungen kann das Öl bzw. Schwarzkümmelöl weitere Inhaltsstoffe, insbesondere einfach ungesättigte Fettsäuren wie beispielsweise Ölsäure, mehrfach, insbesondere zweifach, ungesättigte Fettsäuren, wie beispielsweise Linolsäure, sekundäre Pflanzenstoffe, wie beispielsweise Saponine, ätherische Öle, essentielle Aminosäuren, wie beispielsweise L-Phenylalanin und/oder L-Tyrosin, Mineralstoffe, wie beispielsweise Biotin, Selen und Magnesium, sowie Vitamine, wie beispielsweise Provitamin A, B-Vitamine (Vitamin B1, B2 und B6), Vitamin C, Vitamin E, Folsäure und Beta-Carotin (Vorstufe für Vitamin A), enthalten.

Ferner kann das Öl bzw. Schwarzkümmelöl Thymochinon aufweisen, das eine antioxidative sowie entzündungshemmende Wirkung besitzt.

Ferner kann der Schwarzkümmel in Form von Samen (Schwarzkümmelsamen) vorliegen.

In weiterer Ausgestaltung der Erfindung weist der Schwarzkümmel oder der aus Schwarzkümmel gewonnene Bestandteil einen Anteil von 0,1 Gew-% bis 4 Gew.-%, vorzugsweise 0,9 Gew.-% bis 1,1 Gew.-%, auf, bezogen auf das Gesamtgewicht der Zusammensetzung.

In weiterer Ausgestaltung der Erfindung weist die Zusammensetzung ferner Stärke, insbesondere Kartoffelstärke, bevorzugt Süßkartoffelstärke, auf. Die Stärke weist vorzugsweise Amylose und Amylopektin, insbesondere in einem Verhältnis von Amylose zu Amylopektin von 1:4 bis 1:5, auf. Daneben kann die Stärke geringe Mengen von Eiweiß und Fett aufweisen. Durch die zusätzliche Anwesenheit von Stärke lässt sich die Fressakzeptanz der erfindungsgemäßen Zusammensetzung vorteilhafterweise zusätzlich erhöhen.

In weiterer Ausgestaltung der Erfindung weist die Stärke einen Anteil von 15 Gew.-% bis 50 Gew.-%, insbesondere 30 Gew.-% bis 40 Gew.-%, vorzugsweise 30 Gew.-% bis 36 Gew.-%, insbesondere 32 Gew.-% bis 36 Gew.-%, auf, bezogen auf das Gesamtgewicht der Zusammensetzung.

Die Zusammensetzung der vorliegenden Erfindung ist vorzugsweise frei von Fleisch oder daraus hergestellten Produkten. Insbesondere kann die Zusammensetzung frei von Fleischbestandteilen, insbesondere Fleischproteinen, sein.

Ferner ist die Zusammensetzung der vorliegenden Erfindung vorzugsweise frei von Fisch oder anderen aquatischen Tieren oder daraus hergestellten Produkten. Insbesondere kann die Zusammensetzung frei von Fischbestandteilen, insbesondere Fischproteinen, oder Bestandteilen, insbesondere Proteinen, von anderen aquatischen Tieren sein.

Ferner kann die Zusammensetzung der vorliegenden Erfindung frei von Hefe, insbesondere Bierhefe, sein.

In weiterer Ausgestaltung der Erfindung handelt es sich bei der Zusammensetzung um eine vegetarische Zusammensetzung, d.h. um eine Zusammensetzung ohne Bestandteile, die von getöteten Tieren stammen. Hierbei handelt es sich um eine besonders nachhaltige Ausgestaltung der Erfindung.

In weiterer Ausgestaltung der Erfindung weist die Zusammensetzung ferner Geflügeleiweiß, insbesondere Hühnereiweiß, auf. Dadurch lässt sich vorteilhafterweise die Fressakzeptanz der erfindungsgemäßen Zusammensetzung zusätzlich steigern. Obendrein ist Geflügeleiweiß, insbesondere Hühnereiweiß, bekömmlich und hochverdaulich. Zudem besitzt Geflügeleiweiß eine hohe biologische Wertigkeit. So besitzt Hühnereiweiß beispielsweise eine biologische Wertigkeit von 98.

Unter dem Ausdruck "Geflügeleiweiß" soll im Sinne der vorliegenden Erfindung ein Eiweiß verstanden werden, das in Geflügeleiern, insbesondere im Eiklar und/oder Eigelb von Geflügeleiern, vorkommt. Entsprechend soll unter dem Ausdruck "Hühnereiweiß" im Sinne der vorliegenden Erfindung ein Eiweiß verstanden werden, das in Hühnereiern, insbesondere im Eiklar und/oder Eigelb von Hühnereiern, vorkommt.

In weiterer Ausgestaltung der Erfindung weist das Geflügeleiweiß, insbesondere Hühnereiweiß, einen Anteil von 15 Gew.-% bis 50 Gew.-%, insbesondere 25 Gew.-% bis 35 Gew.-%, vorzugsweise 30 Gew.-% bis 32 Gew.-%, auf, bezogen auf das Gesamtgewicht der Zusammensetzung.

In weiterer Ausgestaltung der Erfindung weist die Zusammensetzung abgesehen von dem Geflügeleiweiß, insbesondere Hühnereiweiß, keinen weiteren Bestandteil tierischen Ursprungs auf. Dadurch kann die Nachhaltigkeit der Zusammensetzung zusätzlich erhöht werden.

Weiter kann die Zusammensetzung ferner einen farbgebenden Zusatzstoff aufweisen. Bei dem farbgebenden Zusatzstoff kann es sich beispielsweise um Molkenprotein handeln. Insbesondere kann der farbgebende Zusatzstoff einen Anteil von 0,1 Gew.-% bis 4 Gew.-%, vorzugsweise 0,5 Gew.-% bis 1,5 Gew.-%, aufweisen, bezogen auf das Gesamtgewicht der Zusammensetzung.

Weiter kann die Zusammensetzung ferner Mineralien oder Mineralstoffe, insbesondere Mengenelemente und/oder Spurenelemente, aufweisen. Die Mineralien bzw. Mineralstoffe können insbesondere ausgewählt sein aus der Gruppe bestehend aus Natrium oder natriumhaltige Verbindungen wie natriumhaltige Salze, Kalium oder kaliumhaltige Verbindungen wie kaliumhaltige Salze, Calcium oder calciumhaltige Verbindungen wie calciumhaltige Salze, Phosphor oder phosphorhaltige Verbindungen wie phosphorhaltige Salze, Eisen oder eisenhaltige Verbindungen wie eisenhaltige Salze, Jod oder jodhaltige Verbindungen wie jodhaltige Salze, Zink oder zinkhaltige Verbindungen wie zinkhaltige Salze und Mischungen von wenigstens zwei der vorgenannten Mineralien bzw. Mineralstoffe. Insbesondere können die Mineralien bzw. Mineralstoffe einen Anteil von 0,1 Gew.-% bis 0,5 Gew.-%, vorzugsweise 0,2 Gew.-% bis 0,4 Gew.-%, aufweisen, bezogen auf das Gesamtgewicht der Zusammensetzung.

Weiter kann die Zusammensetzung ferner Konservierungsmittel aufweisen. Die Konservierungsmittel können ausgewählt sein aus der Gruppe bestehend aus Natriumdiacetat, Kaliumsorbat, Calciumacetat, Sorbinsäure und Mischungen von wenigstens zwei der vorgenannten Konservierungsmittel. Insbesondere können die Konservierungsmittel einen Anteil von 0,1 Gew.-% bis 0,2 Gew.-%, aufweisen, bezogen auf das Gesamtgewicht der Zusammensetzung.

Weiter kann die Zusammensetzung als Futterergänzungsmittel, insbesondere in Form eines Kauartikels oder Snacks, vorliegen.

Weiter bevorzugt weist die Zusammensetzung ausschließlich natürliche Bestandteile auf. Mit anderen Worten ist die Zusammensetzung vorzugsweise frei von synthetischen Bestandteilen, d.h. Bestandteilen, die in einem Labor und/oder mittels chemischer Synthese und/oder mittels biotechnologischer Verfahren, hergestellt werden.

Weiter kann die Zusammensetzung vorteilhafterweise bis zu 24 Monate, insbesondere 12 Monate bis 24 Monate, haltbar sein.

In weiterer Ausgestaltung der Erfindung handelt es sich bei der Zusammensetzung um eine Zusammensetzung zur Anwendung oder Verwendung beim Schutz von Haustieren, insbesondere Hunden, vor Parasiten, vorzugsweise Ektoparasiten (Außenparasiten), insbesondere Flöhen und/oder Zecken, und/oder zur Anwendung oder Verwendung bei der Reduktion eines Parasitenbefalls, vorzugsweise Ektoparasitenbefalls (Außenparasitenbefalls), insbesondere Flohbefalls und/oder Zeckenbefalls, von oder bei Haustieren, insbesondere Hunden, und/oder zur Anwendung oder Verwendung bei der Bekämpfung oder Abwehr von Parasiten, vorzugsweise Ektoparasiten (Außenparasiten), insbesondere Flöhen und/oder Zecken, bei Haustieren, insbesondere Hunden.

Gemäß einem zweiten Aspekt betrifft die Erfindung die Verwendung einer Zusammensetzung gemäß erstem Erfindungsaspekt zum Schutz von Haustieren, insbesondere Hunden, vor Parasiten, vorzugsweise Ektoparasiten (Außenparasiten), insbesondere Flöhen und/oder Zecken, und/oder zur Reduktion eines Parasitenbefalls, vorzugsweise Ektoparasitenbefalls (Außenparasitenbefalls), insbesondere Flohbefalls und/oder Zeckenbefalls, von oder bei Haustieren, insbesondere Hunden, und/oder zur Bekämpfung oder Abwehr von Parasiten, vorzugsweise Ektoparasiten (Außenparasiten), insbesondere Flöhen und/oder Zecken, bei Haustieren, insbesondere Hunden.

Bezüglich weiterer Merkmale und Vorteile der Verwendung wird zur Vermeidung von Wiederholungen vollständig auf die im Rahmen des ersten Erfindungsaspekts gemachten Ausführungen Bezug genommen. Die dort insbesondere in Bezug auf die Zusammensetzung beschriebenen Merkmale und Vorteile gelten sinngemäß auch für die Verwendung gemäß zweitem Erfindungsaspekt.

Weitere Merkmale und Vorteile der Erfindung ergeben sich aus der nachfolgenden Beschreibung bevorzugter Ausführungsformen in Form von Beispielen. Dabei können einzelne Merkmale der Erfindung jeweils für sich alleine oder zu mehreren in Kombination miteinander verwirklicht sein. Die bevorzugten Ausführungsformen dienen lediglich der weiteren Erläuterung der Erfindung, die in keiner Weise darauf beschränkt sein soll.

### BEISPIELTEIL

Die in untenstehender Tabelle 1 aufgelisteten Bestandteile wurden entsprechend den dort angegebenen Anteilen gemischt. Die verwendeten Zutaten wurden abgewogen, gemischt und zerkleinert. Danach wurde die Masse in die gewünschte Form gebracht. Im Weiteren erfolgten eine schonende Trocknung, Hygienisierung und Veredelung. Danach wurden die Stücke verpackt.

### Beispiel 1:

| Bestandteil | Anteil [Gew.-%] | Funktion |
|---|---|---|
| Kartoffelstärke | 34 | Geschmack und Grundstoff |
| Hühnereiweiß | 32 | Geschmack und Grundstoff |
| Kokosflocken | 30 | Floh- und Zeckenabwehr |
| Zistrose | 1,7 | Foh- und Zeckenabwehr |
| Molkenprotein | 1 | Farbgebung |
| Schwarzkümmelöl | 1 | Floh- und Zeckenabwehr |
| Mineralien/Konservierungsmittel | 0,3 | Haltbarkeit |

### Beispiel 2:

| Bestandteil | Anteil [Gew.-%] | Funktion |
|---|---|---|
| Kokosflocken | 34 | Geschmack und Grundstoff |
| Hühnereiweiß | 32 | Geschmack und Grundstoff |
| Kartoffelstärke | 30 | Floh- und Zeckenabwehr |
| Zistrose | 1,7 | Foh- und Zeckenabwehr |
| Molkenprotein | 1 | Farbgebung |
| Schwarzkümmelöl | 1 | Floh- und Zeckenabwehr |
| Mineralien/Konservierungsmittel | 0,3 | Haltbarkeit |

### Beispiel 3:

| Bestandteil | Anteil [Gew.-%] | Funktion |
|---|---|---|
| Kartoffelstärke | 36 | Geschmack und Grundstoff |
| Hühnereiweiß | 32 | Geschmack und Grundstoff |
| Kokosflocken | 28 | Floh- und Zeckenabwehr |
| Zistrose | 1,7 | Foh- und Zeckenabwehr |
| Molkenprotein | 1 | Farbgebung |
| Schwarzkümmelöl | 1 | Floh- und Zeckenabwehr |
| Mineralien/Konservierungsmittel | 0,3 | Haltbarkeit |

## Patentansprüche

1. Zusammensetzung zum Schutz von Haustieren, insbesondere Hunden, vor Parasiten, insbesondere Flöhen und/oder Zecken, und/oder zur Reduktion eines Parasitenbefalls, insbesondere Flohbefalls und/oder Zeckenbefalls, von Haustieren, insbesondere Hunden, und/oder zur Bekämpfung oder Abwehr von Parasiten, insbesondere Flöhen und/oder Zecken, bei Haustieren, insbesondere Hunden, aufweisend nachfolgende Bestandteile:
- einen aus Kokosnuss gewonnenen Bestandteil und
- Zistrose oder einen aus Zistrose gewonnenen Bestandteil und/oder Schwarzkümmel oder einen aus Schwarzkümmel gewonnenen Bestandteil,
**dadurch gekennzeichnet, dass** der aus Kokosnuss gewonnene Bestandteil einen Anteil von wenigstens 10 Gew.-% aufweist, bezogen auf das Gesamtgewicht der Zusammensetzung.

2. Zusammensetzung nach Anspruch 1, **dadurch gekennzeichnet, dass** der aus Kokosnuss gewonnene Bestandteil einen Anteil von 10 Gew.-% bis 50 Gew.-%, insbesondere 25 Gew.-% bis 35 Gew.-%, vorzugsweise 28 Gew.-% bis 34 Gew.-% aufweist, bezogen auf das Gesamtgewicht der Zusammensetzung.

3. Zusammensetzung nach Anspruch 1 oder 2, **dadurch gekennzeichnet, dass** es sich bei dem aus Kokosnuss gewonnenen Bestandteil um einen aus dem Fruchtfleisch, insbesondere Kopra, der Kokosnuss gewonnenen Bestandteil, insbesondere um Kokosnussöl, handelt.

4. Zusammensetzung nach Anspruch 1 oder 2, **dadurch gekennzeichnet, dass** es sich bei dem aus Kokosnuss gewonnenen Bestandteil um Kokosflocken handelt.

5. Zusammensetzung nach einem der vorhergehenden Ansprüche, **dadurch gekennzeichnet, dass** es sich bei dem aus Zistrose gewonnenen Bestandteil um ein Öl oder Harz, insbesondere Ladanum oder Ladanumöl, handelt.

6. Zusammensetzung nach einem der vorhergehenden Ansprüche, **dadurch gekennzeichnet, dass** die Zistrose oder der aus Zistrose gewonnene Bestandteil einen Anteil von 0,1 Gew.-% bis 4 Gew.-%, vorzugsweise 1,5 Gew.-% bis 2 Gew.-%, aufweist, bezogen auf das Gesamtgewicht der Zusammensetzung.

7. Zusammensetzung nach einem der vorhergehenden Ansprüche, **dadurch gekennzeichnet, dass** es sich bei dem aus Schwarzkümmel gewonnenen Bestandteil um Schwarzkümmelöl handelt.

8. Zusammensetzung nach einem der vorhergehenden Ansprüche, **dadurch gekennzeichnet, dass** der Schwarzkümmel oder der aus Schwarzkümmel gewonnene Bestandteil einen Anteil 0,1 Gew-% bis 4 Gew.-%, vorzugsweise 0,9 Gew.-% bis 1,1 Gew.-%, aufweist, bezogen auf das Gesamtgewicht der Zusammensetzung.

9. Zusammensetzung nach einem der vorhergehenden Ansprüche, **dadurch gekennzeichnet, dass** die Zusammensetzung ferner Stärke, insbesondere Kartoffelstärke, aufweist.

10. Zusammensetzung nach einem der vorhergehenden Ansprüche, **dadurch gekennzeichnet, dass** die Stärke einen Anteil von 15 Gew.-% bis 50 Gew.-%, insbesondere 30 Gew.-% bis 40 Gew.-%, vorzugsweise 30 Gew.-% bis 36 Gew.-%, aufweist, bezogen auf das Gesamtgewicht der Zusammensetzung.

11. Zusammensetzung nach einem der vorhergehenden Ansprüche, **dadurch gekennzeichnet, dass** es sich bei der Zusammensetzung um eine vegetarische Zusammensetzung handelt.

12. Zusammensetzung nach einem der vorhergehenden Ansprüche, **dadurch gekennzeichnet, dass** die Zusammensetzung ferner Geflügeleiweiß, insbesondere Hühnereiweiß, aufweist.

13. Zusammensetzung nach einem der vorhergehenden Ansprüche, **dadurch gekennzeichnet, dass** das Geflügeleiweiß, insbesondere Hühnereiweiß, einen Anteil von 15 Gew.-% bis 50 Gew.-%, insbesondere 25 Gew.-% bis 35 Gew.-%, vorzugsweise 30 Gew.-% bis 32 Gew.-%, aufweist, bezogen auf das Gesamtgewicht der Zusammensetzung.

14. Zusammensetzung nach Anspruch 12 oder 13, **dadurch gekennzeichnet, dass** die Zusammensetzung abgesehen von dem Geflügeleiweiß, insbesondere Hühnereiweiß, keinen weiteren Bestandteil tierischen Ursprungs aufweist.

15. Zusammensetzung nach einem der vorhergehenden Ansprüche zur Anwendung beim Schutz von Haustieren, insbesondere Hunden, vor Parasiten, vorzugsweise Ektoparasiten, insbesondere Flöhen und/oder Zecken, und/oder bei der Reduktion eines Parasitenbefalls, vorzugsweise Ektoparasitenbefalls, insbesondere Flohbefalls und/oder Zeckenbefalls, von Haustieren, insbesondere Hunden, und/oder bei der Bekämpfung oder Abwehr von Parasiten, vorzugsweise Ektoparasiten, insbesondere Flöhen und/oder Zecken, bei Haustieren, insbesondere Hunden.
